# FASCICULE DE BREVET EUROPEEN

(11) **EP 1 386 047 B1**
(45) Date de publication et mention de la délivrance du brevet: **05.01.2005**
(21) Numéro de dépôt: 02714301.5
(22) Date de dépôt: 15.03.2002
(51) Int. Cl.: E05B 17/00, B60J 5/10, B60S 1/58, B62D 65/00

(54) **MODULE D'EQUIPEMENT DE VEHICULE AUTOMOBILE**
AUSRÜSTUNGSMODUL EINES KRAFTFAHRZEUGES
MOTOR VEHICLE EQUIPMENT MODULE

(30) Priorité: 30.04.2001 FR 0106096
(43) Date de publication de la demande: 04.02.2004
(73) Titulaire: VALEO SYSTEMES D'ESSUYAGE, 78321 La Verrière (FR)
(72) Inventeur: CATHALA, Franck, F-78310 Maurepas (FR)
(86) Numéro de dépôt international: PCT/FR2002/000925
(87) Numéro de publication internationale: WO 2002/088496

(56) Documents cités:
- FR-A- 2 796 915

## Description

L'invention concerne un module d'équipement de véhicule automobile qui comporte une serrure, comme dans FR 2 796 915.

Les véhicules automobiles comportent des modules d'équipement regroupant des composants. Il arrive que l'un des composants soit en deux éléments ou parties et que chacun de ces deux éléments soit fixé sur une partie du véhicule dont l'une est mobile par rapport à l'autre.

La partie mobile peut par exemple être un ouvrant, tel qu'une porte ou un hayon arrière, qui est monté articulé par rapport à la structure du véhicule entre une position ouverte et une position fermée. De façon à maintenir l'ouvrant en position fermée, le module comporte une serrure de verrouillage.

De façon connue, la serrure est constituée d'un pêne qui peut être monté sur la partie fixe et d'une gâche qui est montée sur l'ouvrant.

Selon un autre exemple, la partie mobile est un panneau vitré qui est monté mobile sur un ouvrant tel que le hayon du véhicule de façon à obturer une ouverture. Ainsi, le panneau vitré peut être articulé par son bord supérieur autour d'un axe de direction horizontale par rapport à l'ouvrant.

De façon à maintenir le panneau vitré articulé en position fermée, le véhicule peut être équipé d'une serrure constituée d'un pêne et d'une gâche qui sont fixés sur l'ouvrant et sur le panneau vitré respectivement.

De façon à assurer un fonctionnement optimal de la serrure, la position relative du pêne et de la gâche doit être déterminée avec précision.

Or, les zones de fixation du pêne et de la gâche sur la partie fixe et la partie mobile respectivement sont généralement réalisées dans des unités de production ou des machines différentes. Par conséquent, les dispersions de fabrication ne permettent pas de positionner les zones de fixation du pêne par rapport aux zones de fixation de la gâche de façon fiable et répétitive.

De façon à permettre le fonctionnement de la serrure malgré les dispersions de fabrication, il est alors nécessaire de prévoir des opérations de réglage de la positon de la gâche et/ou de pêne lors de leurs assemblages.

Pour ce faire, de façon connue, le pêne est fixé sur la partie fixe, puis la partie mobile est ouverte et la gâche y est fixée, c'est à dire que le dispositif de fixation permet un léger réglage de la position finale de la gâche par rapport à la partie mobile.

Ensuite, la partie mobile est fermée de façon que la gâche et le pêne coopèrent entre eux, la position de la gâche est alors définie avec précision.

Enfin la partie mobile est ouverte à nouveau et la gâche est immobilisée sur la partie mobile.

La fixation de la serrure sur le véhicule nécessite donc un nombre important de manipulations, ce qui augmente le temps d'assemblage du véhicule.

Le module peut aussi comporter un dispositif d'essuyage constitué d'un moteur et d'un arbre d'entraînement qui sont chacun fixés sur la partie fixe et sur la partie mobile respectivement de façon qu'ils soient accouplés lorsque la partie mobile est en position fermée.

Ainsi, en plus du positionnement relatif du pêne et de la gâche, il faut prévoir le positionnement relatif du moteur et de l'arbre d'entraînement, ce qui augmente le nombre d'opérations de réglage, ainsi que leur complexité.

De façon à résoudre ces problèmes, l'invention propose un module d'équipement de véhicule automobile qui comporte une serrure constituée d'un premier composant, qui est un pêne reçu dans un boîtier ou une gâche, destiné être monté sur une partie de support, telle qu'un ouvrant du véhicule, et d'un second composant, qui est une gâche ou un pêne reçu dans un boîtier respectivement, destiné à être monté sur une partie, telle qu'un panneau vitré de l'ouvrant, qui est mobile selon une direction globalement axiale par rapport à la partie de support, entre une position ouverte et une position fermée dans laquelle le pêne coopère avec la gâche,
caractérisé en ce que, lors de la livraison du module en vue de sa fixation sur le véhicule, les deux composants de la serrure sont reliés entre eux par une platine intermédiaire qui permet d'indexer temporairement la position du pêne par rapport à la position de la gâche de façon à faciliter le montage et la fixation du module sur le véhicule.

Selon d'autres caractéristiques de l'invention :
- le module d'équipement comporte un dispositif d'essuyage de la partie mobile qui est constitué d'un moteur d'entraînement fixé sur la partie de support et, d'un palier qui est fixé sur la partie mobile et qui reçoit axialement à rotation un arbre d'entraînement d'un bras d'essuie-glace qui est accouplé avec l'arbre de sortie du moteur lorsque la partie mobile est en position fermée, et lors de la livraison du module en vue de sa fixation sur le véhicule, l'arbre de sortie et le palier sont reliés entre eux par la platine intermédiaire qui permet d'indexer temporairement la position de l'arbre de sortie du moteur par rapport à la position du palier ;
- le premier composant de la serrure et le palier sont portés par un élément commun de support ;
- le premier composant de la serrure et/ou le palier sont réalisés en une seule pièce avec l'élément de support commun, notamment par moulage ;
- la platine intermédiaire comporte des premiers moyens de maintien temporaire et de positionnement avec l'élément de support commun et des seconds moyens de positionnement du second composant de la serrure et/ou du moteur selon la direction axiale ;
- la platine comporte des seconds moyens de maintien temporaire du second composant de la serrure et/ou de l'arbre de sortie du moteur ;
- la platine intermédiaire est réalisée en une pièce commune avec au moins l'un des moyens de maintien temporaire et/ou des moyens de positionnement, notamment par moulage ;
- le moteur et le second composant de la serrure comportent un point de fixation commun sur la partie de support du véhicule ;
- le moteur et le second composant de la serrure sont portés par un élément commun de liaison ;
- l'élément de liaison forme une partie du second composant de la serrure et/ou du moteur.

D'autres caractéristiques et avantages de l'invention apparaîtront à la lecture de la description détaillée qui suit pour la compréhension de laquelle on se reportera aux dessins annexés parmi lesquels :
- la figure 1 est une vue schématique en section par un plan vertical et longitudinal de l'arrière d'un véhicule automobile ;
- la figure 2 est une vue en perspective d'un module d'équipement de véhicule automobile réalisé selon l'état de la technique ;
- la figure 3 est une vue en perspective éclatée d'un module d'équipement de véhicule automobile qui comporte une platine intermédiaire d'indexation temporaire de la position d'un pêne et d'un moteur par rapport à la position d'une gâche et d'un palier d'une serrure et d'un dispositif d'essuyage respectivement, réalisé selon l'invention ;
- la figure 4 est une vue en perspective selon une autre direction de la platine intermédiaire d'indexation ;
- la figure 5 est une vue en perspective du module d'équipement représenté à la figure 3, les éléments de la serrure et du dispositif d'essuyage étant reliés par la platine intermédiaire;
- la figure 6 est une vue en perspective du module d'équipement représenté à la figure précédente lors de son assemblage sur l'ouvrant arrière d'un véhicule automobile ;
- la figure 7 est une vue en perspective du module d'équipement assemblé sur le véhicule après la suppression de la platine intermédiaire d'indexation temporaire.

Dans la suite de la description, le module d'équipement du véhicule comporte à titre non limitatif, une serrure et un dispositif d'essuyage.

D'autres composants tels qu'un feu de stop, un dispositif de vision arrière et/ou un feu d'éclairage de la plaque d'immatriculation, peuvent être réalisés avec le module sans sortir du cadre de l'invention.

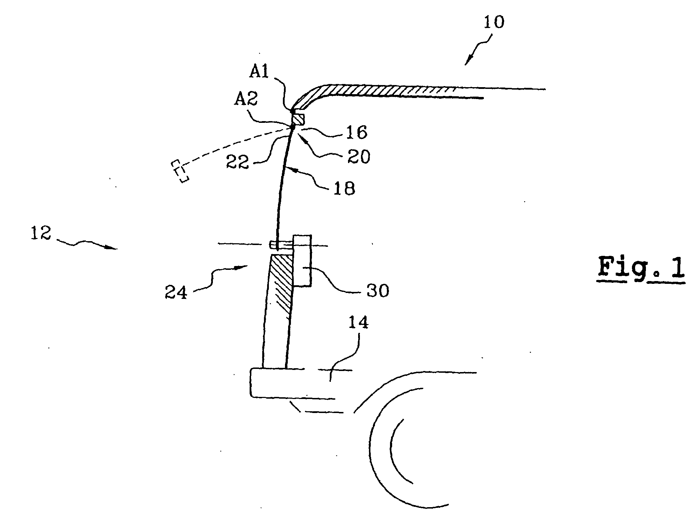

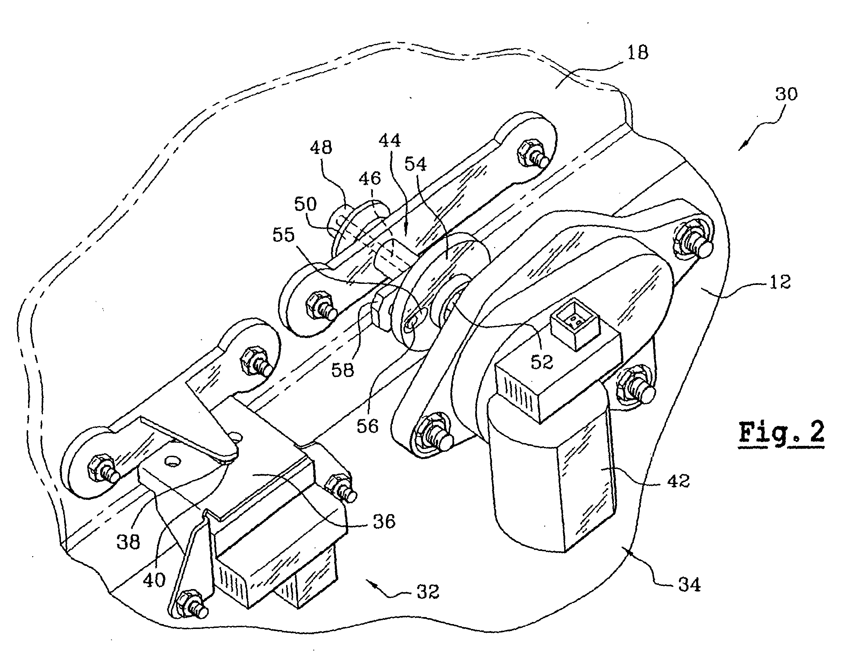

De façon à faciliter la compréhension de la description une orientation avant, arrière, et supérieure, inférieure sera utilisée, à titre non limitatif, conformément à l'orientation de droite à gauche et de haut en bas des figures 1 à 3 et 5 à 7.

La figure 1 représente de façon schématique la partie arrière d'un véhicule automobile 10 qui comporte une partie de support qui est ici un ouvrant arrière ou hayon 12 qui peut être monté articulé par rapport à la structure 14 du véhicule 10 selon un axe A1 d'orientation sensiblement horizontale.

L'ouvrant arrière 12 comporte dans sa partie supérieure une ouverture 16 qui est obturée par une partie mobile qui est ici un panneau vitré 18.

Selon une variante la partie de support 12 peut consister en un élément de structure du véhicule et la partie mobile en un ouvrant articulé par rapport à la partie de support 12.

Le panneau vitré 18 peut être constitué d'un cadre de renfort et de fixation qui reçoit une vitre. Le cadre de renfort et de fixation permet de relier la vitre à l'ouvrant 12 du véhicule par l'intermédiaire de moyens de liaison 20.

Le panneau vitré 18 peut aussi être simplement constitué d'une vitre qui est reliée à l'ouvrant 12 du véhicule par l'intermédiaire des moyens de liaison 20.

lci, les moyens de liaison 20 consistent en une articulation d'axe A2 qui est située sur le bord supérieur 22 du panneau vitré 18. Ainsi, le panneau vitré 18 est monté mobile entre une position fermée représentée en trait fort et une position ouverte représentée en trait pointillé à la figure 1.

L'ouvrant arrière 12 est équipé dans une zone inférieure 24 d'un module d'équipement 30 qui comporte ici une serrure 32 et un dispositif d'essuyage 34 de la vitre du panneau vitré 18.

La serrure 32 est constituée d'un premier composant qui est ici, à titre non limitatif, un pêne qui est agencé dans un boîtier 36 monté sur la zone inférieure 24 de l'ouvrant arrière 12 et d'un second composant qui est ici une gâche 38 qui est montée sur la face interne du panneau vitré 18.

Lorsque le panneau vitré 18 est en position fermée, la gâche 38 est reçue dans une fente complémentaire 40 du boîtier 36 qui débouche vers l'avant, et coopère avec le pêne, propre à assurer le verrouillage de la gâche 38 dans le fond arrière de la fente 40 de façon à empêcher son mouvement vers l'avant et à verrouiller la position le panneau vitré 18 en position fermée.

Le pêne est un élément mobile entre une position de verrouillage qui permet de bloquer la gâche 38 dans le fond arrière de la fente 40, et une position d'ouverture dans laquelle la gâche 38 peut sortir librement de la fente 40 vers l'avant de façon à permettre le pivotement du panneau vitré 18 vers sa position ouverte.

Le pêne peut être rappelé dans la position de verrouillage par des moyens élastiques tel qu'un ressort, la libération de la gâche 38 étant alors obtenue par l'actionnement d'une poignée d'ouverture qui commande le passage du pêne en position d'ouverture.

Ainsi, lorsque l'utilisateur désire manoeuvrer le panneau vitré 18 vers sa position ouverture, il actionne la poignée d'ouverture et exerce concomitamment un effort vers l'arrière sur le panneau vitré 18.

Selon une variante, le pêne est motorisé, notamment par un moteur électrique. Ainsi, le verrouillage ou la libération de la gâche 38 est obtenue par la commande d'un circuit électrique.

Dans la suite de la description lorsque l'on fait référence à la position du pêne, il s'agit de sa position par rapport à d'autres éléments, notamment par rapport à la gâche, et non sa position de verrouillage ou d'ouverture.

Le dispositif d'essuyage 34 est principalement constitué d'un moteur d'entraînement 42 fixé sur l'ouvrant arrière 12 et d'un palier arrière 44 fixé sur le panneau vitré 18. Le palier arrière 44 reçoit axialement à rotation un arbre d'entraînement 46 d'un bras d'essuie-glace non représenté.

Le palier arrière 44 comporte un fût axial 48 qui traverse le panneau vitré 18.

De façon à assurer l'étanchéité entre l'extérieur et l'intérieur du véhicule 10, un joint 50 est monté autour de l'extrémité libre arrière du fût 48.

L'arbre d'entraînement 46 est accouplé en rotation avec l'arbre de sortie 52 du moteur 42 lorsque le panneau vitré 18 est en position fermée.

L'accouplement entre l'arbre d'entraînement 46 et l'arbre de sortie 56 du moteur 42 de type connu est principalement constitué d'un plateau 54 qui est solidaire de l'arbre de sortie 52 et qui comporte une lumière radiale 55 et d'une manivelle 58 qui est fixée par exemple par soudage à l'extrémité libre arrière de l'arbre d'entraînement 46.

La manivelle 58 porte un doigt d'entraînement 56 qui est agencé dans une zone excentrée par rapport à l'arbre d'entraînement 46.

L'accouplement consiste en la coopération du doigt d'entraînement 56 dans la lumière radiale 55 qui permet de transmettre le mouvement de rotation de l'arbre de sortie 52 à l'arbre d'entraînement 46.

Le positionnement de la gâche 38 par rapport à la fente 40 du boîtier 36 et au pêne, ainsi que le positionnement du palier 44 par rapport à l'arbre de sortie 52 du moteur d'entraînement 42 (notamment au plateau 54), doivent être réalisés avec précision de façon que la serrure 32 puisse verrouiller la position du panneau vitré 18 et que le moteur d'entraînement 42 puisse entraîner l'arbre d'entraînement 46 du bras d'essuie-glace en rotation alternée.

Cependant, tel que décrit précédemment, le positionnement de la gâche 38 par rapport au pêne ainsi que celui de l'arbre de sortie 52 par rapport au palier de guidage 44 nécessitent de nombreuses opérations.

De façon à résoudre ce problème, l'invention propose que, lors de la livraison du module d'équipement 30 en vue de sa fixation sur le véhicule, la gâche 38 et le pêne soient reliés entre eux par une platine intermédiaire 60 qui permet d'indexer temporairement la position du pêne par rapport à la position de la gâche 38 de façon à faciliter le montage et la fixation du module 10 sur le véhicule.

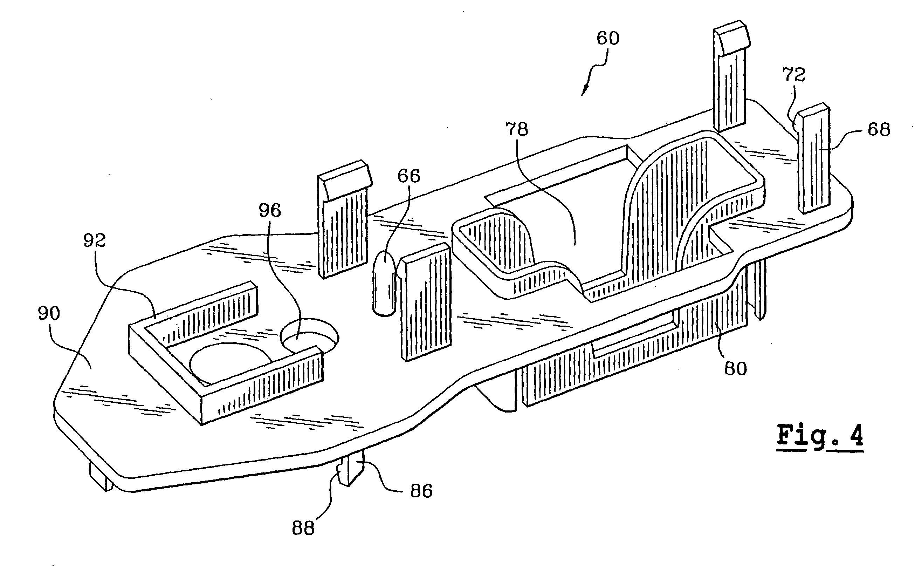

Conformément aux figures 4 à 7, de façon à faciliter l'assemblage de la gâche 38 et du palier 44 sur le panneau vitré 18, ils sont portés par un élément commun de support 62 qui est par exemple réalisé en une seule pièce, notamment par moulage.

La platine intermédiaire 60 comporte des premiers moyens de maintien temporaire et de positionnement 64 avec l'élément commun de support 62.

Les premiers moyens 64 de maintien temporaire et de positionnement sont ici constitués d'un doigt 66 et de pattes 68 qui s'étendent vers l'avant selon une direction axiale, c'est à dire à l'axe longitudinal avant arrière du véhicule.

Lorsque la platine intermédiaire 60 est assemblée avec l'élément commun 62, par un mouvement de translation axiale, le doigt 66 s'engage dans un orifice 70 complémentaire réalisé dans l'élément commun de support 62, et les extrémités libres des pattes 68, conformées en forme de crochets 72, coopèrent avec des ergots 74 de l'élément commun 62.

Le doigt 66 et l'orifice 70 complémentaires permettent de bloquer le déplacement transversal de l'élément commun de support 62 par rapport à la platine intermédiaire 60.

Les pattes 68 permettent d'une part de bloquer la rotation autour du doigt 66 de la platine 60 par rapport à l'élément commun 62 et, d'autre part, d'empêcher la séparation dé la platine 60 de l'élément commun 62 lors de la livraison du module et de sa fixation sur le véhicule.

La platine intermédiaire 60 comporte aussi des seconds moyens de positionnement 76 qui permettent notamment le positionnement du pêne, ici par l'intermédiaire du boîtier 36, par rapport à la platine intermédiaire 60.

Les seconds moyens de positionnement 76 consistent en un évidement 78 à partir de la périphérie duquel une jupe 80 s'étend axialement vers l'arrière. L'évidement 78 est complémentaire de la section transversale sensiblement rectangulaire du boîtier 36. Ainsi, la jupe 80 permet de guider axialement le boîtier 36.

Lors de la livraison du module 30 le boîtier 36 qui comporte le pêne de la serrure 32 doit être maintenu par rapport à la gâche 38.

Selon une solution non représentée, le maintien peut être obtenu par des pattes similaires aux pattes 68 dont les extrémités en forme de crochets coopèrent avec une forme complémentaire du boîtier 40.

Ici, le maintien est obtenu par la coopération du pêne et de la gâche 38, le pêne permettant de verrouiller la position de la gâche 38.

Ainsi, la position des deux composants principaux de la serrure 32 est indexée, c'est-à-dire ici que leur position relative correspond à la position relative dans laquelle ils se trouvent lorsque le panneau vitré 18 est en position fermée. De plus, tant que le pêne n'est pas actionné, la gâche 38 n'est pas libérée.

L'invention propose aussi que, lors de la livraison du module 30 en vue de sa fixation sur le véhicule, l'arbre de sortie 52 du moteur 42 du dispositif d'essuyage 34 et le palier 44 soient reliés entre eux par la platine intermédiaire 60 qui permet d'indexer temporairement la position de l'arbre de sortie 52 par rapport à la position du palier 44.

Ici, étant donné que le palier 44 est réalisé en une seule pièce avec la gâche 38, le palier 44 est maintenu en position par rapport à la platine intermédiaire 60 par les premiers moyens 64 de maintien et de positionnement.

Dans l'éventualité dans laquelle le palier 44 et la gâche 38 sont réalisés en deux éléments indépendants, la platine 64 comporte alors des moyens spécifiques de maintien temporaire et de positionnement du palier 44.

Les seconds moyens de positionnement 76 comportent ici une jupe annulaire 82 qui est alignée axialement avec l'arbre de sortie 52 du moteur 42 et qui coopère avec un évidement cylindrique, non représenté, réalisé dans la face avant du plateau 54.

La platine intermédiaire 60 comporte aussi des seconds moyens de maintien temporaire 84 qui consistent en des pattes 86 dont les extrémités en forme de crochets 88 coopèrent avec la face annulaire avant 89 du plateau 54 de façon à le maintenir assemblé à la platine intermédiaire 60.

Pour que, lors de l'assemblage du module d'équipement, l'arbre d'entraînement 46 soit accouplé avec l'arbre de sortie 52 du moteur, la manivelle 58 ainsi que le plateau 54 sont positionnés angulairement par la platine intermédiaire 60.

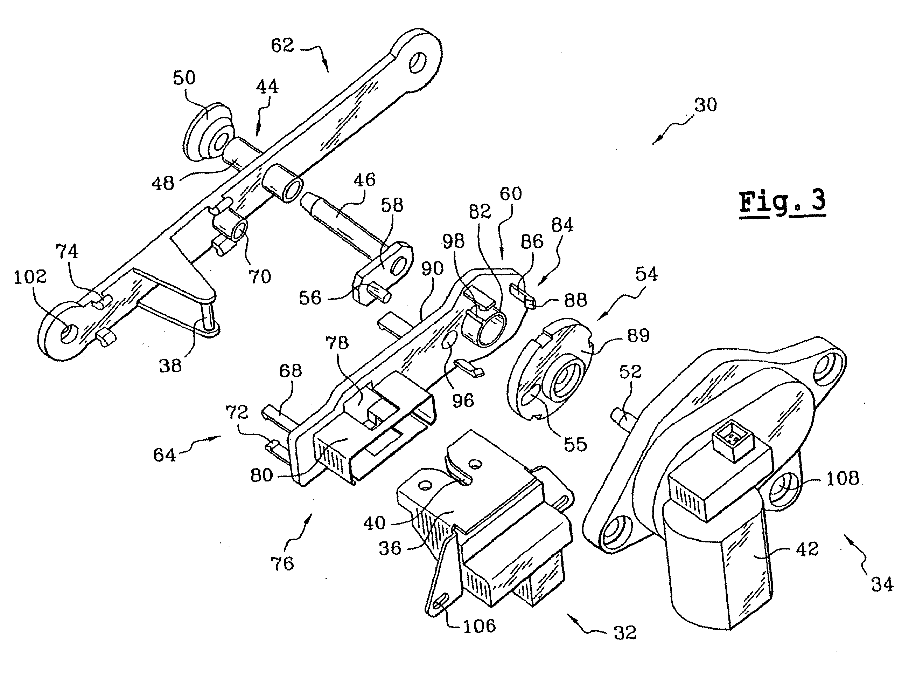

Conformément à la figure 3, la face arrière 90 de la platine intermédiaire 60 comporte une nervure 92 en forme de U dans laquelle est reçue la manivelle 58. L'ouverture de la nervure 92 en forme de U permet le passage de la manivelle qui porte le doigt d'entraînement 56.

De façon à permettre le passage du doigt 56 à travers la plaque intermédiaire 60, celle-ci présente un trou 96.

Ainsi, lorsque la platine intermédiaire 60 et la pièce unique 62 dont le palier 44 reçoit l'arbre d'entraînement 46 sont assemblées, il existe une position angulaire unique déterminée de la manivelle 58.

Pour positionner angulairement le plateau 54 par rapport à l'arbre d'entraînement 46, notamment par rapport au doigt 56, de façon qu'il coopère avec la lumière 55, la jupe annulaire 82 comporte une nervure 98 qui s'étend axialement sur sa périphérie extérieure et qui coopère avec une rainure complémentaire réalisée dans l'évidement cylindrique du plateau 54.

De façon que le doigt 56 s'engage dans la lumière 55 lors de l'assemblage du module d'équipement 30, la position angulaire du doigt 56 par rapport à la nervure 98 est identique à la position angulaire de la lumière 55 par rapport à la rainure réalisée dans l'évidement cylindrique du plateau 54.

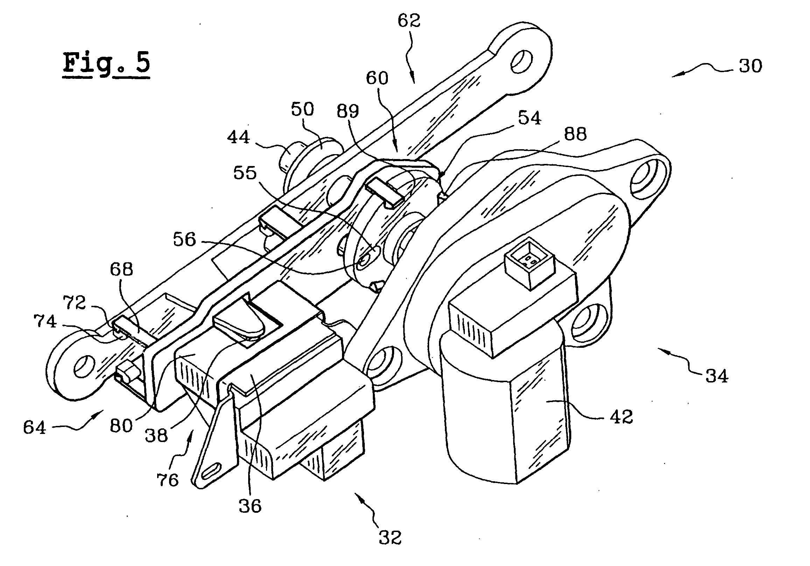

Conformément à la figure 5, la platine intermédiaire 60 permet ainsi de positionner les divers éléments constituant le module 30, notamment la serrure 32 et la dispositif d'essuyage 34, selon un agencement qui correspond à celui du module 30 lorsqu'il est fixé sur le véhicule 10.

Cela permet de faciliter l'opération de fixation du module 30 sur le véhicule.

De façon connue, deux goujons 100 sont collés sur le panneau vitré 18. Lors du montage du module 30, les goujons 100 traversent des trous de fixation 102 de l'élément commun de support 62.

Pour pouvoir ajuster la position de l'élément commun 62, le diamètre intérieur des trous de fixation 102 est supérieur au diamètre extérieur des goujons 100.

L'ouvrant arrière comporte de façon similaire des goujons 104 qui traverse des trous de fixation 106 et 108 de la serrure 32 et du moteur d'essuyage 42.

Ainsi, lors de l'assemblage du module 30 sur le véhicule, l'opérateur positionne le module 30 de façon que l'extrémité libre avant du palier 44 traverse l'orifice de passage 110 correspondant réalisé dans le panneau vitré 18 et que les goujons 100 et 104 coopèrent avec les trous de fixation 102, 106 et 108.

Ensuite, son travail consiste simplement à visser et serrer des écrous 112 sur les goujons 100 et 104 pour fixer l'élément commun 62 sur le panneau vitré 18 ainsi que le boîtier 36 du pêne de la serrure 32 et le moteur 42 du dispositif d'essuyage 34 sur l'ouvrant arrière 12 respectivement.

Ainsi, l'opération de fixation du module 30 est largement simplifiée puisqu'elle est réalisée, à partir de l'intérieur du véhicule, en une seule opération sans manipulation du panneau vitré 18.

Lorsque cette opération est terminée, l'opérateur actionne le pêne de la serrure 32 pour libérer la gâche 38, puis il ouvre le panneau vitré 18. L'effort d'ouverture exercé sur le panneau vitré 18 doit être suffisant pour provoquer la séparation de la platine intermédiaire 60 de l'élément commun 62 de support commun ou du plateau 54.

Ensuite, l'opérateur sépare la platine intermédiaire 60 de la partie du module 30 sur laquelle elle est restée assemblée temporairement.

Les premiers et les seconds moyens de maintien 64, 84 sont dimensionnés pour que l'effort d'ouverture du panneau vitré 18 ainsi que l'effort de séparation ne soient pas trop importants.

La platine intermédiaire 60 peut alors être recyclée ou être expédiée sur le lieu d'assemblage des modules d'équipement 30 pour être réutilisée.

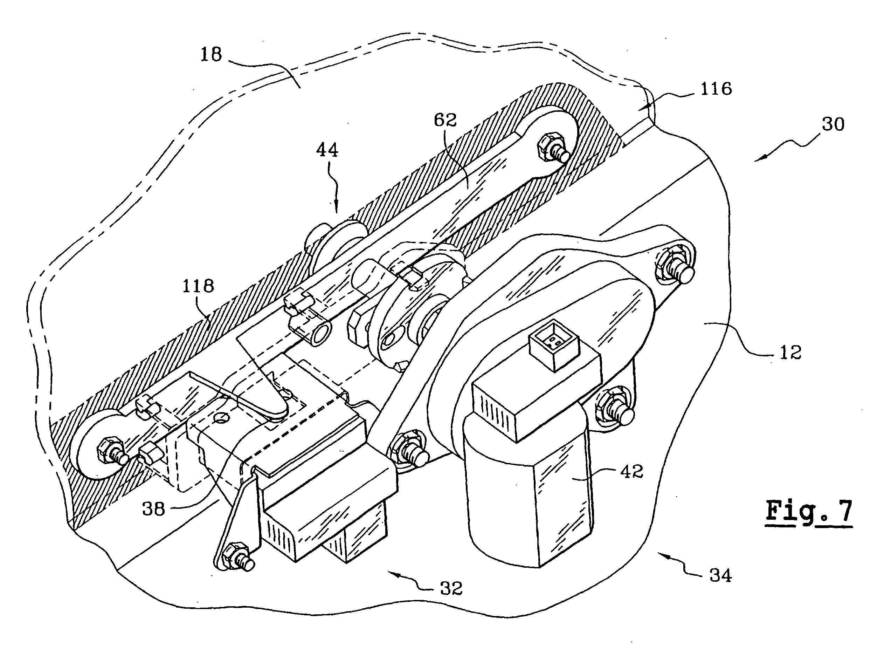

Ensuite, le panneau vitré 18 est fermé conformément à la figure 7. La position relative du pêne par rapport à la gâche 38, ainsi que la position relative de l'arbre de sortie 52 du moteur 42 par rapport au palier 44 sont identiques aux positions relatives de ces éléments lorsque la platine intermédiaire d'indexation 60 est assemblée.

De façon à illustrer cela, la platine 60 est représentée en silhouette à la figure 7, bien qu'elle ne fasse plus partie du module 60.

La séparation de la platine intermédiaire 60 peut être réalisée juste après la fixation du module 30 sur le véhicule, mais elle peut aussi être réalisée plus tard, lors d'une étape ultérieure d'assemblage du véhicule qui nécessite l'ouverture du panneau vitré 18.

Pour diminuer encore la durée de l'opération de fixation, la serrure 32 et le dispositif d'essuyage 34 peuvent comporter une zone de fixation commune.

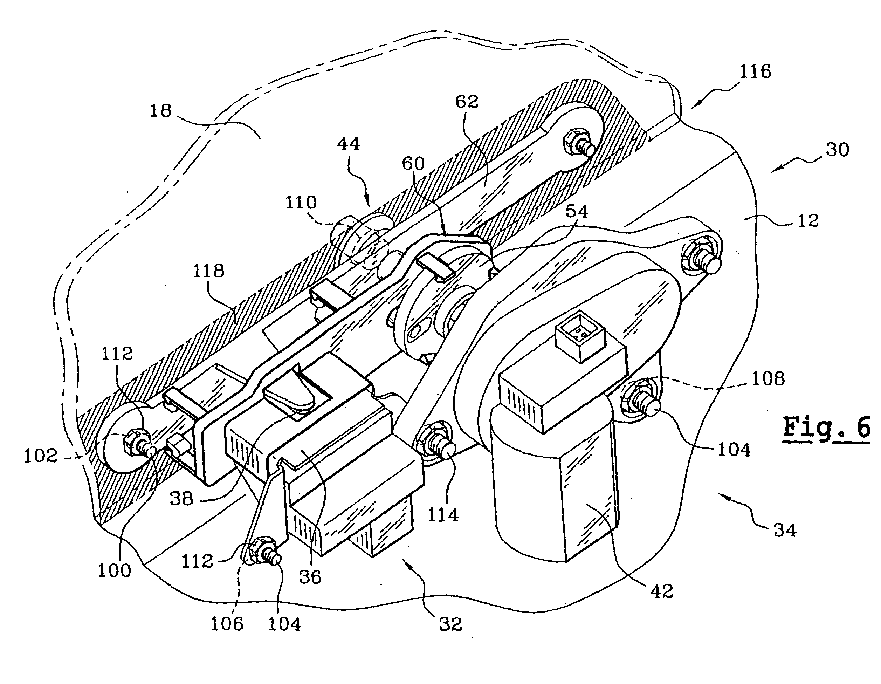

Conformément à la figure 6, un trou de fixation 106 du boîtier 36 et un trou de fixation 108 de la plaque de fermeture du moteur 42 sont traversés par un goujon 114 commun. L'opérateur doit visser et serrer un écrou de moins.

Selon une variante non représentée, le moteur 42 et le second composant de la serrure 32, qui est ici la gâche 38, sont portés par un élément commun de liaison.

Avantageusement, l'élément commun de liaison forme une partie du second composant de la serrure 32 et/ou du moteur 42. Par exemple, l'élément commun de liaison peut former le boîtier 36 de la serrure 32. Il peut aussi former la plaque de fermeture du moteur 42.

La partie inférieure 116 du panneau vitré 18 peut avantageusement comporter une zone teintée 118 en vis à vis du module d'équipement 30. La zone 118 permet ainsi de masquer le module 30 de l'extérieur du véhicule, de façon à favoriser l'esthétique arrière.

La description qui précède n'est pas limitative. En effet, sans sortir du cadre de l'invention, le premier composant peut être la gâche 38 de la serrure et le second composant peut alors être le pêne. Dans ce cas, la gâche 38 est montée sur l'ouvrant arrière 12 et le pêne est monté sur la face interne du panneau vitré 18. De façon similaire, les deux composants de la serrure sont reliés entre eux par une platine intermédiaire 60 qui permet d'indexer temporairement leurs positions l'une par rapport à l'autre, de façon à faciliter le montage et la fixation du module 30 sur le véhicule.

## Revendications

1. Module d'équipement (30) de véhicule automobile qui comporte une serrure (32) constituée d'un premier composant, qui est un pêne reçu dans un boîtier (36) ou une gâche (38), destiné être monté sur une partie de support (12), telle qu'un ouvrant du véhicule, et d'un second composant, qui est une gâche (38) ou un pêne reçu dans un boîtier (36) respectivement, destiné à être monté sur une partie (18), telle qu'un panneau vitré de l'ouvrant, qui est mobile selon une direction globalement axiale par rapport à la partie de support (12), entre une position ouverte et une position fermée dans laquelle le pêne coopère avec la gâche (38),
**caractérisé en ce que**, lors de la livraison du module (30) en vue de sa fixation sur le véhicule, les deux composants de la serrure sont reliés entre eux par une platine intermédiaire (60) qui permet d'indexer temporairement la position du pêne par rapport à la position de la gâche (38) de façon à faciliter le montage et la fixation du module (30) sur le véhicule.

2. Module d'équipement (30) selon la revendication précédente, **caractérisé en ce qu'**il comporte un dispositif d'essuyage (34) de la partie mobile (18) qui est constitué d'un moteur d'entraînement (42) fixé sur la partie de support (12) et, d'un palier (44) qui est fixé sur la partie mobile (18) et qui reçoit axialement à rotation un arbre d'entraînement (46) d'un bras d'essuie-glace qui est accouplé avec l'arbre de sortie (52) du moteur (42) lorsque la partie mobile (18) est en position fermée, et **en ce que**, lors de la livraison du module (30) en vue de sa fixation sur le véhicule, l'arbre de sortie (52) et le palier (44) sont reliés entre eux par la platine intermédiaire (60) qui permet d'indexer temporairement la position de l'arbre de sortie (52) du moteur (42) par rapport à la position du palier (44).

3. Module d'équipement (30) selon la revendication précédente, **caractérisé en ce que** le premier composant de la serrure (32) et le palier (44) sont portés par un élément commun de support (62).

4. Module d'équipement (30) selon la revendication précédente, **caractérisé en ce que** le premier composant de la serrure (32) et/ou le palier (44) sont réalisés en une seule pièce avec l'élément (62) de support commun, notamment par moulage.

5. Module d'équipement (30) selon l'une des revendications 3 ou 4, **caractérisé en ce que** la platine intermédiaire (60) comporte des premiers moyens de maintien temporaire et de positionnement (64) avec l'élément (62) de support commun et des seconds moyens de positionnement (76) du second composant de la serrure (32) et/ou du moteur selon la direction axiale.

6. Module d'équipement (30) selon l'une des revendications 3 à 5, **caractérisé en ce que** la platine (60) comporte des seconds moyens de maintien temporaire (84) du second composant de la serrure (32) et/ou de l'arbre de sortie (52) du moteur (42).

7. Module d'équipement (30) selon l'une des revendications 5 ou 6, **caractérisé en ce que** la platine intermédiaire (60) est réalisée en une pièce commune avec au moins l'un des moyens de maintien temporaire (64, 84) et/ou des moyens de positionnement (64, 76), notamment par moulage.

8. Module d'équipement (30) selon l'une quelconque des revendications 2 à 7, **caractérisé en ce que** le moteur (42) et le second composant de la serrure (32) comportent un point de fixation commun (114) sur la partie de support (12) du véhicule.

9. Module d'équipement (30) selon l'une quelconque des revendications 2 à 7, **caractérisé en ce que** le moteur (42) et le second composant de la serrure (32) sont portés par un élément commun de liaison.

10. Module d'équipement (30) selon la revendication précédente, **caractérisé en ce que** l'élément de liaison forme une partie du second composant de la serrure (32) et/ou du moteur (42).

## Patentansprüche

1. Ausrüstungsmodul (30) für ein Kraftfahrzeug, das ein aus einer ersten Komponente gebildetes Schloss (32) umfasst, die ein in einem Gehäuse (36) aufgenommener, zum Einbau in einen Trägerteil (12) bestimmter Riegel oder Schließhaken ist, wie z. B. eine Öffnung des Fahrzeugs, und einer zweiten Komponente, die jeweils ein in einem Gehäuse (36) aufgenommener, zum Einbau in einen Teil (18), bestimmter Schließhaken (38) oder ein Riegel ist, wie z. B. einer verglasten Fläche der Öffnung, die gemäß einer globalen axialen Richtung im Verhältnis zum Trägerteil (12) zwischen einer offenen Position und einer geschlossenen Position mobil ist, in der der Riegel mit dem Schließhaken (38) zusammenwirkt,
**dadurch gekennzeichnet, dass** bei der Lieferung des Moduls (30) die beiden Komponenten des Schlosses zu seiner Befestigung auf dem Fahrzeug untereinander durch eine Zwischenplatine (60) verbunden sind, die die vorübergehende Indexierung der Position des Riegels im Verhältnis zu der Position des Schließhakens (38) erlaubt, so dass der Einbau und die Befestigung des Moduls (30) auf dem Fahrzeug erleichtert werden.

2. Ausrüstungsmodul (30) gemäß dem vorherigen Anspruch, **dadurch gekennzeichnet, dass** es eine Wischvorrichtung (34) des mobilen Teils (18) umfasst, die aus einem am Trägerteil (12) befestigten Antriebsmotor (42) und aus einem Lager (44) gebildet wird, das auf dem mobilen Teil (18) befestigt wird und das axial in Rotation eine Antriebswelle (46) eines Scheibenwischarms aufnimmt, der mit der Ausgangswelle (52) des Motors (42) gekoppelt ist, wenn der mobile Teil (18) in geschlossener Position ist, und dass bei der Lieferung des Moduls (30) die Ausgangswelle (52) und das Lager (44) zu seiner Befestigung auf dem Fahrzeug untereinander durch die Zwischenplatine (60) befestigt sind, die die vorübergehende Indexierung der Position der Ausgangswelle (52) des Motors (42) im Verhältnis zur Position des Lagers (44) erlaubt.

3. Ausrüstungsmodul (30) gemäß dem vorherigen Anspruch, **dadurch gekennzeichnet, dass** die erste Komponente des Schlosses (32) und das Lager (44) durch ein gemeinsames Trägerelement (62) getragen werden.

4. Ausrüstungsmodul (30) gemäß dem vorherigen Anspruch, **dadurch gekennzeichnet, dass** die erste Komponente des Schlosses (32) und / oder das Lager (44) mit dem gemeinsamen Trägerelement (62) aus einem Stück realisiert werden, insbesondere durch Abformen.

5. Ausrüstungsmodul (30) gemäß Anspruch 3 oder 4, **dadurch gekennzeichnet, dass** die Zwischenplatine (60) erste vorübergehende Festhalte- und Positionierungsmittel (64) mit dem gemeinsamen Trägerelement (62) und zweite Positionierungsmittel (76) der zweiten Komponente des Schlosses (32)und / oder des Motors gemäß der axialen Richtung umfasst.

6. Ausrüstungsmodul (30) gemäß Anspruch 3 bis 5, **dadurch gekennzeichnet, dass** die Platine (60) zweite vorübergehende Festhaltemittel (84) der zweiten Komponente des Schlosses (32) und / oder der Ausgangswelle (52) des Motors (42) umfasst.

7. Ausrüstungsmodul (32) gemäß Anspruch 5 oder 6, **dadurch gekennzeichnet, dass** die Zwischenplatine (60) aus einem gemeinsamen Stück mit wenigstens einem der vorübergehenden Festhaltemitteln (64, 84) und / oder den Positionierungsmitteln (64, 76) realisiert wird, insbesondere durch Abformen realisiert wird.

8. Ausrüstungsmodul (30) gemäß Anspruch 2 bis 7, **dadurch gekennzeichnet**, **dadurch gekennzeichnet, dass** der Motor (42) und die zweite Komponente des Schlosses (32) einen gemeinsamen Befestigungspunkt (114) auf dem Trägerteil (12) des Fahrzeugs umfassen.

9. Ausrüstungsmodul (30) gemäß Anspruch 2 bis 7, **dadurch gekennzeichnet, dass** der Motor (42) und die zweite Komponente des Schlosses (32) durch ein gemeinsames Verbindungselement getragen werden.

10. Ausrüstungsmodul (30) gemäß dem vorherigen Anspruch, **dadurch gekennzeichnet, dass** das Verbindungselement einen Teil der zweiten Komponente des Schlosses (32) und / oder des Motors (42) bildet.

## Claims

1. A motor vehicle equipment module (30) which comprises a lock (32) consisting of a first component, which is a bolt received in a housing (36) or a keeper (38), intended to be mounted on a support part (12), such as a vehicle door, and a second component, which is a keeper (38) or a bolt received in a housing (36) respectively, intended to be mounted on a part (18), such as a glazed panel of the door, which is able to move in a direction roughly axial with respect to the support part (12), between an open position and a closed position in which the bolt cooperates with the keeper (38),
**characterised in that**, when the module (30) is delivered with a view to fixing it to the vehicle, the two components of the lock are connected together by an intermediate plate (60) which makes it possible to temporarily locate the position of the bolt with respect to the position of the keeper (38) so as to facilitate the mounting and fixing of the module (30) on the vehicle.

2. An equipment module (30) according to the preceding claim, **characterised in that** it comprises a device (34) for wiping the movable part (18) which consists of a drive motor (42) fixed to the support part (12) and a bearing (44) which is fixed to the movable part (18) and which axially receives for rotation a shaft (46) driving a wiper arm which is coupled with an output shaft (52) of the motor (42) when the movable part (18) is in the closed position, and **in that**, when the module (30) is delivered with a view to its fixing to the vehicle, the output shaft (52) and the bearing (44) are connected together by the intermediate plate (60) which makes it possible to temporarily locate the position of the output shaft (52) of the motor (42) with respect to the position of the bearing (44).

3. An equipment module (30) according to the preceding claim, **characterised in that** the first component of the lock (32) and the bearing (44) are carried by a common support element (62).

4. An equipment module (30) according to the preceding claim, **characterised in that** the first component of the lock (32) and/or the bearing (44) are produced in a single piece with the common support element (62), in particular by casting.

5. An equipment module (30) according to one of Claims 3 or 4, **characterised in that** the intermediate plate (60) comprises first means (64) of temporary holding and positioning with the common support element (62) and second means (76) of positioning the second component of the lock (32) and/or of the motor in the axial direction.

6. An equipment module (30) according to one of Claims 3 to 5, **characterised in that** the plate (60) comprises second means (84) of temporary holding of the second component of the lock (32) and/or of the output shaft (52) of the motor (42).

7. An equipment module (30) according to one of Claims 5 or 6, **characterised in that** the intermediate plate (60) is produced in a piece common with at least one of the temporary holding means (64, 84) and/or positioning means (64, 76), in particular by casting.

8. An equipment module (30) according to any one of Claims 2 to 7, **characterised in that** the motor (42) and the second component of the lock (32) have a common fixing point (114) on the support part (12) of the vehicle.

9. An equipment module (30) according to any one of Claims 2 to 7, **characterised in that** the motor (42) and the second component of the lock (32) are carried by a common connecting element.

10. An equipment module (30) according to the preceding claim, **characterised in that** the connecting element forms a part of the second component of the lock (32) and/or of the motor (42).
